Europäisches Patentamt

European Patent Office

Office européen des brevets

(19)

(11) Publication number: **0 019 492**
**B1**

(12) **EUROPEAN PATENT SPECIFICATION**

(45) Date of publication of patent specification: **09.04.86**

(51) Int. Cl.⁴: **B 64 D 13/08**

(21) Application number: **80301690.6**

(22) Date of filing: **21.05.80**

(54) Gas conditioning system, especially air conditioning system.

(30) Priority: **22.05.79 US 41451**

(43) Date of publication of application:
**26.11.80 Bulletin 80/24**

(45) Publication of the grant of the patent:
**09.04.86 Bulletin 86/15**

(84) Designated Contracting States:
**DE FR GB NL**

(56) References cited:
**CH-A- 261 037**
**US-A-2 494 785**
**US-A-2 585 570**
**US-A-2 979 916**
**US-A-3 587 243**

(73) Proprietor: **THE GARRETT CORPORATION**
**9851-9951 Sepulveda Boulevard P.O. Box 92248**
**Los Angeles, California 90009 (US)**

(72) Inventor: **Kinsell, Robert C.**
**2100 Westridge Road**
**Los Angeles California (US)**
Inventor: **Saba, Michael P.**
**9551 Bay Meadow**
**Huntington Beach, California (US)**
Inventor: **Strang, James E.**
**8692 Shannon River Circle**
**Fountain Valley, California (US)**

(74) Representative: **Arthur, George Fitzgerald et al**
**KILBURN & STRODE 30, John Street**
**London WC1N 2DD (GB)**

Courier Press, Leamington Spa, England.

## Description

### Field of the Invention

This invention relates to gas conditioning systems, and particularly but not exclusively to air conditioning systems such as are required for passenger aircraft.

### The Prior Art

Various systems have previously been proposed for air conditioning purposes. In general, one of the main functions of these systems is to provide air at a temperature lower than ambient, in order to keep the conditions in the air-conditioned space at the required temperature, despite the possible presence of a heat load in the form of a number of passengers. In a typical previously proposed system, the air for supply to the conditioned space was taken from a source (such as an aircraft engine compressor) at elevated pressure and temperature. This air was then cooled, compressed further by a so-called air-cycle machine (ACM), cooled again to near ambient temperature, and then expanded in a turbine of the air-cycle machine, so that the air leaving the turbine is at a temperature considerably below ambient, as is required for air conditioning purposes. Also, at some stage in the air flow path, it may be necessary to remove entrained moisture from the air, in order to control the relative humidity of the conditioned space. To achieve this, it has been proposed to cool the air below ambient temperature before it is expanded in the turbine, so that a major part of the entrained moisture condenses, and can be removed from the air while the air is still under pressure. For example, this cooling of the air can be achieved by providing a heat exchanger which transfers heat from the air upstream of the turbine to the cold air downstream of the turbine.

Although a major part of the entrained moisture in the air may be removed upstream of the turbine, there is still some moisture in the air passing through the turbine, and this moisture may under some conditions tend to form ice in the heat exchanger downstream of the turbine, and thereby tend to block the air flow. It would be desirable to be able to prevent this build-up of ice, if possible.

Obviously, the quantity of air required to keep the air-conditioned space at the required temperature, despite the heat load, would be reduced if the air-conditioning system could be modified to provide air at a still lower temperature. This can be expressed mathematically by the equation

$$Q = W.Cp \; (T_{cabin} - T_{supply})$$

where
Q is the refrigeration capacity in kJ/minute
W is the air flow rate into cabin in kg/minute
Cp is the specific heat of air (about 1 kJ/kg deg. C)
$T_{cabin}$ is the desired cabin temperature in degrees C.

$T_{supply}$ is the temperature of the air supplied by the air conditioning system, in degrees C.

If Q is kept constant and $T_{supply}$ is reduced, W can also be reduced.

The invention concerns a gas conditioning apparatus for supplying conditioned gas from a source of pressurised gas to a point of use, which comprises a water condensing heat exchanger having a heat exchanger element which defines a heating pass and a cooling pass in heat exchanger relationship; a gas supply conduit which supplies pressurised gas to be conditioned from the source to the inlet of the heating pass for cooling therein by heat transfer to the cooling pass to condense water vapour in the gas flow; a water separator connected to receive the gas flow leaving the heating pass and to separate out the condensate from the gas flow; gas expander means connected to receive the gas flow leaving the water separator and arranged to expand the gas to a lower pressure and thereby to further cool it; an intermediate conduit which connects the delivery of cooled and expanded gas from the expander means to the cooling pass of the heat exchanger whereby the temperature of the cooled gas flowing through the cooling pass is increased by heat transfer from the gas flowing through the heating pass; a delivery conduit arranged to deliver the gas from the cooling pass to the point of use; and a bypass passage which is connected to bypass a portion of the cooled gas flow from the expander means past the cooling pass to the delivery conduit, as known from US—A—2979916 (Mason).

Mason's bypass passage 50 includes a valve 51 which is an essential feature, the purpose of which is to maintain a predetermined constant humidity and that requires selective control of the use of the bypass duct.

According to the present invention the bypass is a straight free passage devoid of any mechanically-operated valve ports for controlling the gas flow therethrough, the bypass being formed as an integral part of the structure of the heat exchange element of the heat exchanger and extending straight through it with portions of the said element lying on opposite sides of the bypass passage and adjacent thereto, through the heating passes of which portions warm pressurised gas from the source flows in a pair of ducts in crossflow.

Thus, whereas Mason is concerned with delivery of cooled and de-humidified air, the apparatus of this invention is capable of delivering conditioned gas at a sub-freezing temperature through the delivery conduit to the point of use, whilst at the same time condensing water vapour in the gas flow through the heating pass of the heat exchanger for removal by the separator.

Thus, the heat exchanger is self-regulating as regards ice formation in the cooling pass in that an increase in pressure drop across the cooling pass due to ice accumulation will divert a proportion of the cooling pass gas flow from the said portions of the heat exchange element to the bypass passage thus causing the unaltered warm crossflow gas flow to reduce the ice accumulation.

Laboratory tests of an air-conditioning system embodying the invention, have shown that air supply temperatures lower than −10°C can be achieved, as compared with the usual minimum air supply temperature of 2 to 5°C. This should result in a reduction of about 40% in the air flow required to hold the cabin temperature at 24°C. This reduction should reduce the amount of fuel required to provide the air-conditioning. Also in comparison with the previously-proposed system having the same air flow capacity, a system embodying the invention will have a greater transient cooling capacity, so that the conditioned space can more quickly be brought to the desired temperature. If an auxiliary power unit (APU) of an aircraft is used as a source of compressed air for the air-conditioning system, the APU need not be operated for such a long time; this both reduces fuel consumption, and increases the life of the APU in terms of calendar time.

The provision of the bypass passage also helps to avoid the accumulation of ice in the heat exchanger, since any accumulation of ice will tend to increase the proportion of the gas leaving the expander means which flows through the bypass passage.

The reduced flow of cold gas through the heat exchanger means that the gas flow in the heating pass of the heat exchanger is better able to discourage ice formation.

As an added precaution against ice formation, the heat exchanger may include heating means at the entry to the cooling pass.

The invention may be carried into practice in various ways, but one specific embodiment will now be described by way of example, with reference to the accompanying drawings.

Brief Description of the Drawings

Figure 1 is a system schematic of a group of components forming a refrigeration pack embodying the invention, for an air-conditioning system in an aircraft;

Figure 2 is a perspective view, with a portion cut away, of one possible form of heat exchanger for use in the system of Figure 1;

Figure 2A is an enlarged view of a portion of Figure 2, enclosed within the circle 2A;

Figure 3 is a highly schematic perspective illustration of the heat exchanger of Figure 2; and

Figure 4 is a graphical illustration of the relationship between air supply temperature and cooling capacity.

Description of the Preferred Embodiment

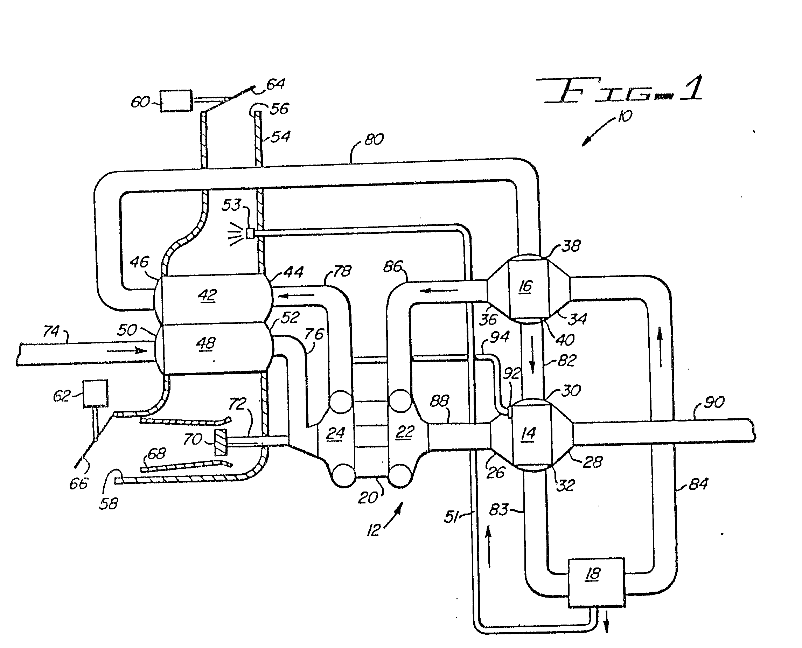

Figure 1 shows a system 10 for conditioning of the air supplied from a source (not shown) to a point of use (also not shown). The system 10 includes a primary heat exchanger 48, a secondary heat exchanger 42, and a component group 12 comprising a first water-condensing heat exchanger 14, a second heat exchanger 16, a water trap or separator 18 and an ACM (air cycle machine) 20. The machine 20 comprises an air expansion turbine 22 and a centrifugal type air compressor 24, having their rotors mounted on a common shaft 72, together with a fan wheel 70.

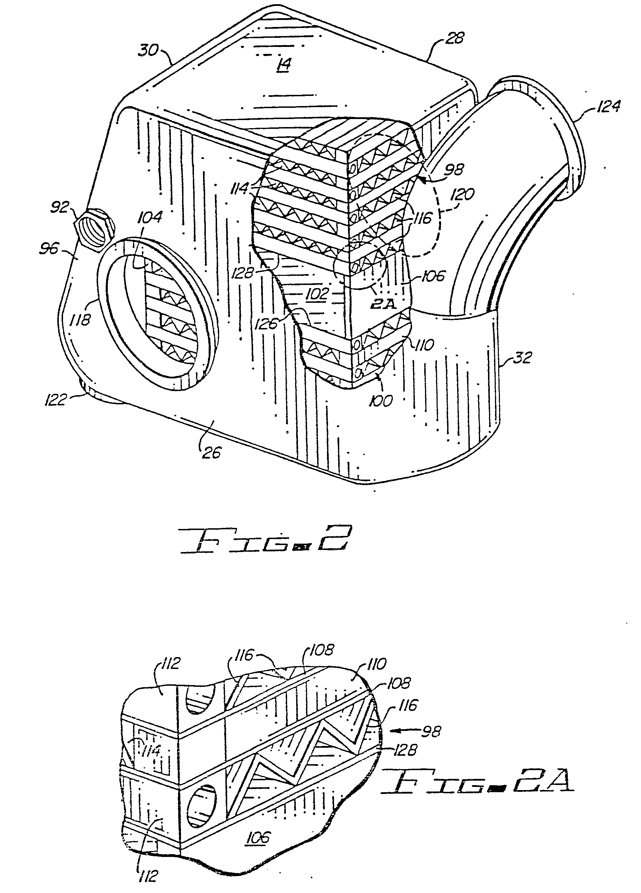

The heat exchangers 48, 42, 14 and 16 are, in the preferred form of the invention, of the type generally known in the art as a cross-flow-plate-fin device. The structure of the heat exchanger 14 is shown in more detail in Figures 2 and 2A. The heat exchanger 14 has a first group of passages for carrying a cold air flow from a cold air inlet plenum casing 26 to a cold air outlet plenum casing 28, and a second group of passages for carrying a warm air flow from a warm air inlet plenum casing 30 to a warm air outlet plenum casing 32, with heat transfer from the warm air flow to the cold air flow.

In operation, compressed air is supplied from a source, such as the compressor of an engine of the aircraft, through an inlet duct 74 to a warm air inlet plenum casing 50 of the primary heat exchanger 48. The air then flows through warm air passages in the heat exchanger 48 to an outlet plenum casing 52, and is in the process cooled by heat transfer to the flow of cooling fluid through cold air passages in the heat exchanger 48. In the present example, the cooling fluid is ambient air, and is supplied to the heat exchanger 48 through a duct 54. When the aircraft is in flight, the flow of cooling air is produced by the ram effect, and controlled by door-type valves 64 and 66 positioned at the upper and lower ends 56 and 58 of the duct 54, and coupled to be adjusted by actuators 60 and 62. When the aircraft is stationary on the ground, the flow of cooling air is produced by the fan wheel 70. This fan wheel is surrounded by a jet pump jacket 68, which is mounted within the duct 54 downstream of the primary heat exchanger 48, to form a jet pump for moving the cooling air.

The cooled air then flows from the plenum casing 52 through a duct 76 to the compressor 24, where it is compressed further, and then flows through a duct 78 to a warm air inlet plenum casing 44 of the secondary heat exchanger 42. In the secondary heat exchanger, the compressed air flows through warm air passages to a warm air outlet plenum casing 46, while the flow of cooling air in the duct 54 passes through cold air passages in the heat exchanger 42 immediately before passing through the primary heat exchanger 48, and thereby cools the compressed air more or less back to the temperature prevailing at the entry to the compressor 24.

The compressed and cooled air then flows through a duct 80 to a warm air inlet plenum casing 38 of the heat exchanger 16, and flows through warm air passages in the heat exchanger to a warm air outlet plenum casing 40. In the process, heat is transferred from the compressed air to air flowing in a further downstream part of the air flow path, as will become clear later on. The compressed air then flows through a duct 82 to the warm air inlet plenum 30 of the heat exchanger 14, and flows through the warm air passages of this heat exchanger to the outlet plenum 32, transferring heat to air flowing in an even further downstream part of the air flow path. The heat exchanger 14 cools the compressed air sufficiently far that condensation of the water (entrained in vapour form in the source air) occurs. Thus, the heat exchanger 14 may also be described as a condenser.

The cooled air and entrained water droplets and mist resulting from the condensation then flow through a duct 83 to the water trap or separator 18, where nearly all of the condensed water is removed. The dry air then flows through a duct 84 to a cold air inlet plenum casing 34 of the heat exchanger 16, where, in the process of flowing through the heat exchanger to a cold air outlet plenum casing 36, the air absorbs the heat removed from the air on its first pass through the heat exchanger 16. Thus the heat exchanger 16 could also be described as a reheater. From the outlet plenum 36 the reheated air flows through a duct 86 to the inlet of the expansion turbine 22 where it is expanded and cooled to a point consistent with the energy supplied by the turbine 22 to the compressor 24 and the fan wheel 70. The turbine and compressor thus operate in what is generally known as bootstrap fashion.

From the outlet of the turbine 22 the air is conducted by a duct 88 to the plenum casing 26 of the condenser 14, where the air flows through the cold air passages to the plenum casing 28 and into a duct 90 leading to the point of usage. In passing through the heat exchanger 14 for the second time, the air absorbs the heat which was removed from the air on its first pass through the heat exchanger; the amount of heat transferred is sufficient to condense nearly all the water vapour in the air, as described above.

To enhance the cooling effect of the cooling air flow in the duct 54, the water separated out by the water trap 18 may be fed through a pipe 51 to a nozzle 53, which injects the water into the duct 54 upstream of the heat exchangers 42 and 48.

The heat exchanger or condenser 14 is also provided with a pipe coupling fixture 92 (Figures 1 and 2) coupled with one end of a pipe 94 (Figure 1), whose other end is coupled to the duct 78, to divert a flow of hot compressed air from the delivery of the compressor 24 to the chamber defined by a plenum casing 96, into which the pipe fixture 92 leads.

Referring now to Figures 2 and 2A for more details of the structure of the heat exchanger 14, it can be seen that the heat exchanger comprises two identical core sections 98 and 100 (Figure 2), which are spaced apart so as to leave a free passage 102 having side walls 104 and 106, and leading from the cold air inlet plenum 26 to the cold air outlet plenum 28.

Each of the core elements 98 and 100 comprises a plurality of plates 108 (Figure 2A), spaced apart at their edges by header bars 110 and 112. Of the various spaces between the plates 108, alternate ones form the cold air passages, while the remaining ones form the warm air passages. The cold air passages are bounded along the edges of the plates 108 by the header bars 110, and contain fins 114 which have corrugations extending parallel to the cold air flow direction; similarly, the warm air passages are bounded by the header bars 112, and contain corrugated fins 116.

The plates which bound the core sections 98 and 100, where these adjoin the free passage 102, are similar to the plates 108, but are indicated by the reference numerals 128 and 126 respectively.

The fins may for example be secured to the adjacent plate surfaces by brazing. While the fins 114 and 116 have been shown as having a substantially triangular section having apex contact with the plates 108, 126 and 128, it will be understood that fins of other configurations may be employed.

Fittings 118, 120, 122 and 124 are provided in the walls of the plenum casing 26, 28, 30 and 32 respectively, to allow the ducts 88, 90, 82 and 83 to be coupled to these casings.

The header bars 112 along the edges of the warm air passages are hollow to provide passages leading from the chamber formed by the plenum casing 96 to the chamber formed by the warm air outlet plenum casing 32, so that the heated air from the compressor 24 provides heating of the bars 112 to prevent icing at the entrance to the cold air passages. The air leaving the hollow header bars 112 then mixes with the cooled air flowing from the warm air passages.

The passage 102 provides a bypass around the cold air passages; at least a portion of the expanded and cooled air furnished at the discharge of the turbine 22 reaches the point of use through this bypass. It has been discovered that if about one-third of the total air flow is directed through the bypass duct, sufficient cooling of the air in the warm air passages to provide condensation can still be obtained.

This could not be done with the same apparatus but without a bypass, while still supplying air to the point of use at temperatures below freezing. The bypass allows proper water removal while still providing sub-freezing supply air.

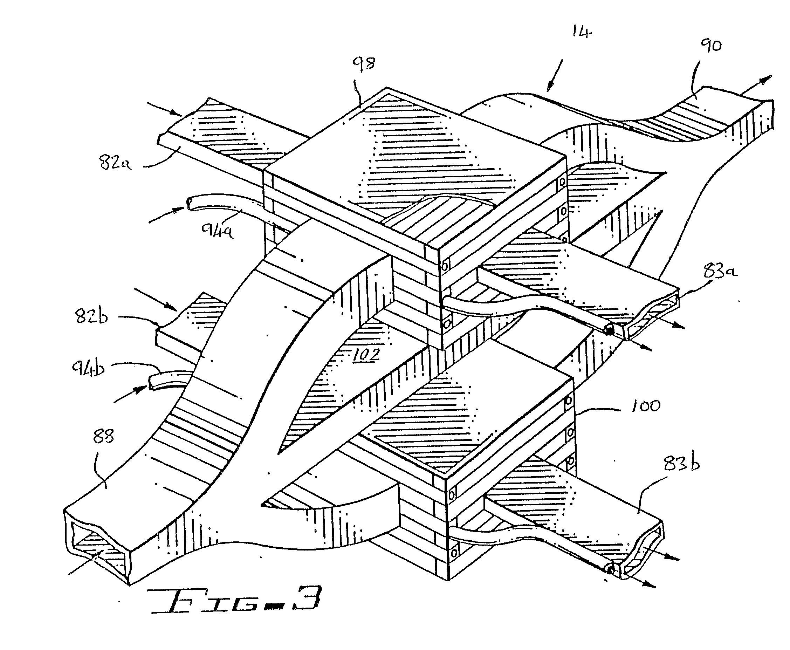

The orientation and relationship of the various elements of the condenser 14 of Figures 1, 2 and 2A may be more clearly understood by reference to the schematic representation of Figure 3, which uses the same reference numerals as in Figures 1, 2 and 2A. The duct 82 of Figure 1, which feeds the warm air from the heat exchanger 16 of Figure 1 to the heat exchanger 14, is schematically depicted in Figure 3 as a pair of ducts 82a and 82b. Correspondingly, the pair of ducts schematically depicted on Figure 3 at 83a and 83b correspond to the duct 83 of Figure 1.

It may also be noted that it is not always necessary to extract hot air from the compressor output in order to warm the header bars 112 for anti-icing purposes. This is because, if any ice should collect on the heat exchanger core face, the pressure drop through the core increases, diverting more air through the bypass. This means that less cold air will traverse the core. With the same flow of warm air in the warm air passages, the reduced amount of cold air flowing in the heat exchanger core is warmed to a higher temperature, but the temperature of the output cold air mixture varies only two or three degrees when operating at designed conditions.

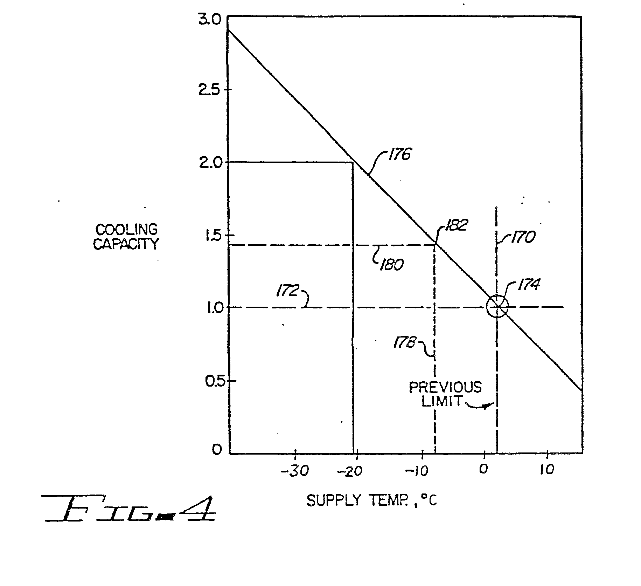

The increase of cooling capacity with a decrease of the air delivery temperature is shown in Figure 4. The vertical dashed line 170 extends from the abscissa at about the 2°C point which is the previous lower limit of air delivery temperature. The horizontal dashed line 172 which extends from the ordinate at the cooling capacity point of 1.0 (arbitrary units), intersects the line 170 at a point 174 lying on a line 176 whose slope is derived from the equation for cooling capacity Q given above.

It may be noted that relatively minor decreases in the air delivery temperature can result in relatively large percentage increases of cooling capacity from the same refrigeration capacity. For example, if the delivery temperature can be lowered to about −8°C, the cooling capacity increases by about 40%, as seen from dashed lines 178, 180 intersecting at point 182 on line 176.

## Claims

1. A gas conditioning apparatus for supplying conditioned gas from a source (74) of pressurised gas to a point of use, the apparatus comprising a water-condensing heat exchanger (14), having a heat-exchange element (98, 100) which defines a heating pass and a cooling pass in heat-exchange relationship; a gas supply conduit (78, 80) which supplies pressurised gas to be conditioned from the source (24) to the inlet of the heating pass for cooling therein by heat transfer to the cooling pass to condense water vapour in the gas flow; a water separator (18) connected to receive the gas flow leaving the heating pass and to separate out the condensate from the gas flow; gas expander means (22) connected to receive the gas flow leaving the water separator (18) and arranged to expand the gas to a lower pressure and thereby to further cool it; an intermediate conduit (88) which connects the delivery of cooled and expanded gas from the expander means (22) to the cooling pass of the water-condensing heat exchanger (14) whereby the temperature of the cooled gas flowing through the cooling pass is increased by heat transfer from the gas flowing through the heating pass; a delivery conduit (90) arranged to deliver the gas from the cooling pass to the point of use; and a bypass passage (102) which is connected to bypass a portion of the cooled gas flow from the expander means past the cooling pass to the delivery conduit (90); characterised in that the bypass passage (102) is a straight free passage devoid of any mechanically operated valve ports for controlling the gas flow therethrough, the bypass being formed as an integral part of the structure of the heat exchange element (98, 100) of the water-condensing heat exchanger (14) and extending straight through it with portions (98, 100) of the said element lying on opposite sides of the bypass passage and adjacent thereto, through the heating passes of which portions warm pressurised gas from the source (74) flows in a pair of ducts (82a, 83a, 82b, 83b) in crossflow.

2. Apparatus as claimed in Claim 1 which also includes a second heat exchanger (16) having a heating pass through which the gas flow from the source (74) passes upstream of the heating pass of the water-condensing heat exchanger (14) and having a cooling pass through which the gas flow passes on its way from the heating pass of the water-condensing heat exchanger (14) to the expander means (22), the heating and cooling pases of the second heat exchanger being in heat exchange relationship with one another.

3. Apparatus as claimed in Claim 1 or Claim 2, in which the bypass passage (102) is dimensioned to pass not more than half, for example approximately one-third of the total gas flow.

4. Apparatus as claimed in any of the preceding claims, in which the water-condensing heat exchanger (14) includes heating means (112) at the entry to its cooling pass, to inhibit the formation of ice.

5. Apparatus as claimed in any of the preceding claims in which the expander means (22) is an expansion turbine arranged to produce mechanical work, and which also includes as the source (74) of pressurised gas a primary source of gas under pressure connected to the intake of a compressor (24) which is connected to be driven by the work produced by the expansion turbine (22).

6. Apparatus as claimed in Claim 4 and Claim 5, in which the heating means (112) comprises heating passages (112) formed within the heat-exchange element (98, 100) of the water-condensing heat exchanger (14) and connected (by 94) to receive gas tapped off from the delivery (78) of the compressor (24) upstream of any cooling devices (42) associated with the compressor delivery.

7. Apparatus as claimed in Claim 5 or Claim 6, further including a secondary heat-exchanger (42) having a heating pass and a cooling pass in heat-exchange relationship with one another, the heating pass of the secondary heat exchanger (42) being disposed in the gas flow path between the outlet of the compressor (24) and the heating pass of the second heat exchanger (16), and further including a coolant duct (54) in whose interior the cooling pass of the secondary heat exchanger (42) is disposed, one end of the coolant duct communicating with a source of coolant fluid, and fan means (70) also connected to be driven by the work produced by the expansion turbine (22) the fan means being disposed in the coolant duct (54) to assist movement of coolant fluid through the coolant duct (54) and through the cooling pass of the secondary heat exchanger (42).

8. Apparatus as claimed in Claim 7 including spray nozzle means (53) disposed in the coolant duct upstream of the cooling pass of the secondary heat exchanger (42) and arranged to spray condensate collected by the water separator (18) into the interior of the coolant duct (54).

9. Apparatus as claimed in Claim 8, further including a primary heat exchanger (48) having a heating pass and a cooling pass in heat-exchange relationship with one another, the heating pass of the primary heat exchanger being disposed in the gas flow path between the primary source of pressurised gas and the intake of the compressor (24) and the cooling pass of the primary heat exchanger (48) being disposed in the interior of the coolant duct (54) downstream of the cooling pass of the secondary heat exchanger and in the coolant flow path of coolant through the coolant duct.

## Patentansprüche

1. Gasversorgungsanlage zum Einspeisen von konditioniertem Gas aus einer Druckgasquelle (74) an eine Verwendungsstelle, mit einem wasserkondensierenden Wärmetauscher (14), der ein Wärmetauschelement (98, 100) besitzt, welches einen Heizpfad und einen Kühlpfad in Wärmeaustauschbeziehung miteinander definiert, eine Gasspeiseleitung (78, 80), die zu konditionierendes Druckgas aus der Quelle (24) in den Einlaß des Heizpfades einspeist, um es darin durch Wärmeübertragung in den Kühlpfad abzukühlen, damit Wasserdampf im Gasstrom kondensiert wird, einen Wasserabscheider (18), der so geschaltet ist, daß er den den Heizpfad verlassenden Gasstrom aufnimmt und das Kondensat aus dem Gasstrom trennt, eine Gasexpansionsvorrichtung (22), die den den Wasserabscheider (18) verlassenden Gasstrom aufnimmt und das Gas auf einen niedrigeren Druck expandiert sowie das Gas weiter kühlt, eine Zwischenleitung (88), die die Abgabe des gekühlten und expandierten Gases aus der Expansionsvorrichtung (22) in den Kühlpfad des Wasserkondensier-Wärmetauschers (14) abgibt, wobei die Temperatur des gekühlten Gases, das durch den Kühlpfad strömt, durch Wärmeübertragung aus dem den Heizpfad durchströmenden Gasstrom erhöht, eine Abgabeleitung (19), die das Gas aus dem Kühlpfad an die Verwendungsstelle abgibt, und eine Bypass-Kanal (102), der einen Teil des gekühlten Gasstromes aus der Expansionsvorrichtung am Kühlpfad vorbei zur Abgabeleitung (90) führt, dadurch gekennzeichnet, daß der Bypass-Kanal (102) ein gerader, freier Kanal ist, der keine mechanisch betätigten Ventilöffnungen zur Steuerung des Gasstromes durch ihn aufweist, wobei der Bypass als integraler Teil der Konstruktion des Wärmetauschelementes (98, 100) des wasserkondensierenden Wärmetauschers (14) ausgebildet ist und sich geradlinig durch ihn erstreckt, und wobei Teile (98, 100) des Elementes auf entgegengesetzten Seiten des Bypass-Kanales und in der Nähe dazu liegen, und warmes Druckgas aus der Quelle (74) durch die Heizpfade dieser Teile in zwei Leitungen (82a, 83a, 82b, 83b) im Kreuzfluß strömt.

2. Anlage nach Anspruch 1, die einen zweiten Wämetauscher (16) aufweist, der einen Heizpfad besitzt, durch den der Gasstrom aus der Quelle (74) stromaufwärts in bezug auf den Heizpfad des das Wasser kondensierenden Wärmetauschers (14) strömt, und der einen Kühlpfad besitzt, durch den der Gasstrom auf seinem Weg aus dem Heizpfad des das wasserkondensierenden Wärmetauschers (14) zur Expansionsvorrichtung (22) strömt, wobei die Heiz- und Kühlpfade des zweiten Wärmetauschers in Wärmeaustausch miteinander stehen.

3. Anlage nach Anspruch 1 und 2, bei der der Bypass-Kanal (102) so dimensioniert ist, daß er nicht mehr als die Hälfte, vorzugsweise etwa ein Drittel des gesamten Gasstromes führt.

4. Anlage nach einem der vorausgehenden Ansprüche, bei der der wasserkondensierende Wärmetauscher (14) eine Heizvorrichtung (112) am Eingang in seinen Kühlpfad aufweist, um die Bildung von Eis zu verhindern.

5. Anlage nach einem der vorausgehenden Ansprüche, bei der die Expansionsvorrichtung (22) eine Expansionsturbine ist, die so ausgelegt ist, daß sie mechanische Arbeit erzeugt, und die ferner als Druckgasquelle (24) eine primäre Druckgasquelle besitzt, die mit dem Einlaß eines Kompresors (74) verbunden ist, der seinerseitsso geschaltet ist, daß er von der durch die Expansionsturbine (22) erzeugten Energie angetrieben wird.

6. Anlage nach Anspruch 4 und 5, bei der die Heizvorrichtung (112) Heizkanäle (112) aufweist, die innerhalb des Wärmetauschelementes (98, 100) des wasserkondensierenden Wärmetauschers (14) ausgebildet und (bei 94) so geschaltet sind, daß sie Gas aufnehmen, das aus der Abgabe (78) des Kompressors (24) stromaufwärts in bezug auf eine Kühlvorrichtung (42), die der Kompressorabgabe zugeordnet ist, entnommen wird.

7. Anlage nach Anspruch 5 oder 6, mit einem sekundären Wärmetauscher (42), der einen Heizpfad und einen Kühlpfad in Wärmeaustauschbeziehung zueinander aufweist, wobei der Heizpfad des sekundären Wärmetauschers (24) im Gasstrompfad zwischen dem Auslaß des Kompressors (24) und dem Heizpfad des zweiten Wärmetauschers (16) angeordnet ist, mit einer Kühlmittelleitung (54), in deren Innerem der Kühlpfad des sekundären Wärmetauschers (42) angeordnet ist, wobei ein Ende der Kühlmittelleitung mit einer Kühlmittelfluidquelle in Verbindung steht, und mit einer Gebläsevorrichtung (70), die so geschaltet ist, daß sie von der durch die Expansionsturbine (22) erzeugten Energie angetrieben wird, und die so in der Kühlmittelleitung (54) angeordnet ist, daß sie eine Bewegung des Kühlmittelfluids durch die Kühlmittelleitung (54) und durch den Kühlpfad des sekundären Wärmetauschers (42) unterstützt.

8. Anlage nach Anspruch 7, mit einer Sprühdüsenvorrichtung (53), die in der Kühlmittelleitung stromaufwärts in bezug auf den Kühlpfad des sekundären Wärmetauschers (42) angeordnet ist und die Kondensat, das von dem Wasserseparator (18) gesammelt wird, in das Innere der Kühlmittelleitung (54) sprüht.

9. Anlage nach Anspruch 8, mit einem primären Wärmetauscher (48), der einen Heizpfad und einen Kühlpfad in Wärmeaustauschbeziehung miteinander besitzt, wobei der Heizpfad des primären Wärmetauschers in dem Gasstrompfad zwischen der primären Druckgasquelle und dem Einlaß des Kompressors (24) angeordnet ist, und der Kühlpfad des primären Wärmetauschers (48) im Inneren der Kühlmittelleitung (54) stromabwärts in bezug auf den Kühlpfad des sekundären Wärmetauschers und im Kühlmittelströmungspfad des Kühlmittels durch die Kühlmittelleitung angeordnet ist.

**Revendications**

1. Appareil de conditionnement de gaz pour la distribution de gaz conditionné d'une source (74) de gaz sous pression à un point d'utilisation, l'appareil comprenant un échangeur de chaleur à condensation d'eau (14) qui comporte un élément (98, 100) d'échange de chaleur définissant un passage de chauffage et un passage de refroidissement en relation d'échange de chaleur; un conduit (78, 80) d'amenée de gaz qui amène le gas sous pression à conditionner de la source (24) à l'entrée du passage de chauffage, pour son refroidissement par transfert de chaleur au passage de refroidissement, afin de condenser la vapeur d'eau contenue dans le flux de gaz; un séparateur d'eau (18) raccordé de manière à recevoir le flux de gaz qui sort du passage de chauffage et à séparer le condensat du flux de gaz; des moyens de détente de gaz (22) raccordés de manière à recevoir le flux de gaz sortant du séparateur d'eau (18) et prévus pour détendre le gaz à une pression inférieure, afin de le refroidir à nouveau; un conduit intermédiaire (88) qui raccorde la sortie du gaz refroidi et détendu venant des moyens de détente (22) au passage de refroidissement de l'échangeur de chaleur à condensation d'eau (14), de sorte que la température du gaz refroidi qui circule dans le passage de refroidissement est augmentée par transfert de chaleur à partir du gaz qui circule dans le passage de chauffage; un conduit de distribution (90) prévu pour amener le gaz du passage de refroidissement au point d'utilisation; et un passage de contournement (102) qui est raccordé de manière à dériver une partie du flux de gaz refroidi des moyens de détente au conduit de distribution (90), au-delà du passage de refroidissement; caractérisé en ce que le conduit de contournement (102) est un passage direct et libre, exempt de tout orifice de vanne à commande mécanique pour le réglage du flux de gaz traversant, le conduit de contournement étant sous la forme d'une partie solidaire de la structure de l'élément d'échange de chaleur (98, 100) de l'échangeur de chaleur à condensation d'eau (14) et s'étendant directement à travers cet élément, des parties (98, 100) dudit élément étant situées de part et d'autre du passage de contournement et adjacentes à celui-ci, du gaz chaud sous pression venant de la source (74) circulant dans les passages de chauffage desdites parties dans deux conduits (82a, 83a, 82b, 83b) à courants croisés.

2. Appareil suivant la revendication 1, qui comprend également un deuxième échangeur de chaleur (16) comportant un passage de chauffage dans lequel circule le gaz venant de la source (74), à l'amont du passage du chauffage de l'échangeur de chaleur à condensation d'eau (14), et comportant un passage de refroidissement dans lequel circule le gaz sur son parcours du passage de chauffage de l'échangeur de chaleur à condensation d'eau (14) aux moyens de détente (22), les passages de chauffage et de refroidissement du deuxième échangeur de chaleur étant en relation d'échange de chaleur l'un avec l'autre.

3. Appareil suivant la revendication 1 ou 2, dans lequel le passage de contournement (102) est dimensionné de manière à ne pas dériver plus de la moitié, par exemple environ un tiers, du flux total de gaz.

4. Appareil suivant l'une quelconque des revendications précédentes, dans lequel l'échangeur de chaleur à condensation d'eau (14) comporte des moyens de chauffage (112) à l'entrée de son passage de refroidissement, pour empêcher la formation de glace.

5. Appareil suivant l'une quelconque des revendications précédentes, dans lequel les moyens de détente (22) comprennent une turbine de détente disposée de manière à produire un travail mécanique, et qui comprend également comme source (74) de gaz sous pression une source primaire de gaz sous pression reliée à l'aspiration d'un compresseur (24) qui est accouplé de manière à être entraîné par le travail fourni par la turbine de détente (22).

6. Appareil suivant la revendication 4 et la revendication 5, dans lequel les moyens de chauffage (112) comprennent des passages de chauffage (112), ménagés à l'intérieur de l'élément d'échange de chaleur (98, 100) et l'échangeur de chaleur à condensation d'eau (14) et raccordés (par 94) de manière à recevoir du gaz prélevé au refoulement (78) du compresseur (24) à l'amont des dispositifs de refroidissement (42) associés au refoulement du compresseur.

7. Appareil suivant la revendication 5 ou la revendication 6, qui comprend en outre un échangeur de chaleur secondaire (42) comportant un passage de chauffage et un passage de refroidissement en relation d'échange de chaleur l'un avec l'autre, le passage de chauffage de l'échangeur de chaleur secondaire (42) étant disposé dans le parcours du gaz entre la sortie du compresseur (24) et le passage de chauffage du deuxième échangeur de chaleur (16), et qui comprend également un conduit (54) de fluide de refroidissement à l'intérieur duquel le passage de refroidissement de l'échangeur de chaleur secondaire (42) est disposé, une extrémité du conduit de fluide de refroidissement communiquant avec une source de fluide de refroidissement, et un ventilateur (70) également accouplé de manière à être entraîné par le travail fourni par la turbine de détente (22), le ventilateur étant disposé dans le conduit de fluide de refroidissement (54) de manière à aider au mouvement du fluide de refroidissement dans le conduit de fluide de refroidissement (54) et à travers le passage de refroidissement de l'échangeur de chaleur secondaire (42).

8. Appareil suivant la revendication 7, comprenant des moyens à buse de pulvérisation (53) disposés dans le conduit de fluide de refroidissement, à l'amont du passage de refroidissement de l'échangeur de chaleur secondaire (42), et agencés pour pulvériser le condensat, collecté par le séparateur d'eau (18), dans l'intérieur du conduit de fluide de refroidissement (54).

9. Appareil suivant la revendication 8, qui comprend en outre un échangeur de chaleur primaire (48) comportant un passage de chauffage et un passage de refroidissement en relation d'échange de chaleur l'un avec l'autre, le passage de chauffage de l'échangeur de chaleur primaire étant disposé dans le parcours de gaz entre la source primaire de gaz sous pression et l'aspiration du compresseur (24), et le passage de refroidissement de l'échangeur de chaleur primaire (48) étant disposé dans l'intérieur du conduit de fluide de refroidissement (54) à l'aval du passage de refroidissement de l'échangeur de chaleur secondaire et dans le parcours du fluide de refroidissement dans le conduit de fluide de refroidissement.

FIG-1

0 019 492

_FIG-2_

_FIG-2A_

Fig-3

$\mathbb{F}$ᴵᴳ‑$4$